# EUROPEAN PATENT SPECIFICATION

(11) **EP 3 075 521 B1**
(45) Date of publication and mention of the grant of the patent: **18.10.2017**
(21) Application number: 16161713.9
(22) Date of filing: 22.03.2016
(51) Int. Cl.: B29C 65/52, A41H 43/04, D06H 5/00

(54) **CLOTH BONDING DEVICE**
VORRICHTUNG ZUM VERBINDEN VON STOFF
DISPOSITIF DE LIAISON DE TISSU

(30) Priority: 31.03.2015 JP 2015070872
(43) Date of publication of application: 05.10.2016
(73) Proprietor: Brother Kogyo Kabushiki Kaisha, Nagoya-shi, Aichi 467-8561 (JP)
(72) Inventor: MURAKAMI, Kenji, Nagoya-shi, Aichi 467-8562 (JP); UMEDA, Kazutoshi, Nagoya-shi, Aichi 467-8562 (JP); IWAKOSHI, Hiroyasu, Nagoya-shi, Aichi 467-8562 (JP); SHIBATA, Itaru, Nagoya-shi, Aichi 467-8562 (JP); KOKURYU, Takahiro, Nagoya-shi, Aichi 467-8562 (JP)
(74) Representative: Prüfer & Partner mbB Patentanwälte · Rechtsanwälte

(56) References cited:
- EP-A1- 2 216 102
- EP-A1- 2 253 458
- EP-A1- 2 783 836
- JP-A- 2013 067 929
- JP-A- 2014 047 447
- JP-A- 2014 058 757

## Description

### BACKGROUND

The present invention relates to a cloth bonding device.

A cloth bonding device discharges an adhesive from a nozzle and the adhesive sticks to a lower cloth. With the adhesive sticking to the lower cloth, the cloth bonding device clamps an upper cloth and the lower cloth between an upper feed roller and a lower feed roller, then presses and feeds the upper cloth and the lower cloth to bond them together. A bonding process of the cloth bonding device varies according to the positions in which the upper cloth and the lower cloth are placed. The nozzle of the cloth bonding device can be replaced to fit the bonding process. A cloth bonding device that is described in Japanese Laid-Open Patent Publication No. 2010-270416 includes a base portion, a pillar portion, an arm portion, and a support portion. The base portion supports the pillar portion, and the pillar portion supports the arm portion. The lower feed roller is supported by the base portion, and the upper feed roller is supported by the arm portion. The arm portion supports the support portion such that the support portion can be mounted and removed. The support portion supports the nozzle and is able to swing in relation to the arm portion. The nozzle can be replaced by another nozzle that fits the bonding process of the cloth bonding device and that projects in a different direction from the support portion.

In the cloth bonding device that is described above, the positions of the upper feed roller and the lower feed roller do not change in relation to the direction in which the nozzle extends. It is necessary for the position of the nozzle to remain the same in relation to the upper feed roller and the lower feed roller, no matter which one of nozzles that project in different directions from the support portion is mounted in the cloth bonding device. Therefore, the support portion includes a first support portion and a second support portion and supports the nozzle such that the position of the nozzle remains the same in relation to the upper feed roller and the lower feed roller, no matter which one of the nozzles that project in different directions from the support portion is mounted. When replacing nozzle, an operator must replace one of the first support portion and the second support portion with the other. Therefore, the nozzle replacement operation is sometimes burdensome.

EP 2 216 102 A1 discloses a cloth bonding device according to the preamble of claim 1. Other devices are known from EP 2 783 836 A1; JP 2014 058757 A; JP 2013 067929 A; and JP 2014 047447 A.

### SUMMARY

Various embodiments of the broad principles derived herein provide a cloth bonding device that simplifies the nozzle replacement operation.

The cloth bonding device includes a base portion, a pillar portion, an arm portion, an upper roller, a lower roller, a nozzle, an upper drive mechanism, an upper mounting base, a guide portion, and a first fixing portion. The pillar portion extends upward from the base portion. The arm portion extends from the pillar portion and is disposed opposite the base portion. The upper roller feeds a cloth. The lower roller faces the upper roller and is disposed below the cloth. The lower roller clamps the cloth against the upper roller and feeds the cloth in a feed direction by operating in coordination with the upper roller. The nozzle can be mounted on and removed from a support body that is provided on the arm portion. The nozzle discharges an adhesive onto the cloth on upstream of the lower roller and the upper roller in the feed direction. The upper drive mechanism supports the upper roller and rotationally drives the upper roller. The upper mounting base is provided on the arm portion, and the upper drive mechanism is fixed to the upper mounting base. The guide portion is provided on the upper mounting base and extends in a specified direction. The guide portion guides the upper drive mechanism in the specified direction. The specified direction is parallel to the direction in which the arm portion extends. The first fixing portion fixes the upper drive mechanism, which is guided by the guide portion, in one of fixing positions that are lined up in the specified direction. Because an operator is able to fix the upper drive mechanism to the upper mounting base in any one of the fixing positions, it is not necessary to replace the support body when the nozzle is replaced in accordance with the bonding process of the cloth bonding device. Therefore, the cloth bonding device is able to simplify the operation of replacing the nozzle in accordance with the bonding process. The upper drive mechanism moves easily in the specified direction along the guide portion. Therefore, the cloth bonding device easily moves the upper drive mechanism in the specified direction and can stabilize the fixing position of the upper drive mechanism in relation to the upper mounting base.

The first fixing portion may include a through-hole, a fastening member, and fastening holes. The fastening holes are provided in the upper mounting base and discretely disposed along the specified direction. The through-hole is provided in the upper drive mechanism and disposed opposite at least one of the fastening holes. The fastening member is inserted through the through-hole and tightened into one of the fastening holes. The operator inserts the fastening member through the through-hole and tightens it into the one of the fastening holes. Therefore, the cloth bonding device is able to fix the upper drive mechanism securely to the upper mounting base.

The through-hole may also be an oblong hole having a long axis extending in the specified direction. The through-hole is easily disposed opposite one of the fastening holes. Therefore, the cloth bonding device can improve the operability of the fixing of the upper drive mechanism to the upper mounting base.

The fastening holes may also include first fastening holes and second fastening holes. The first fastening holes are discretely disposed in the specified direction. The second fastening holes are discretely disposed in the specified direction below the first fastening holes. The through-hole may also include a first through-hole and a second through-hole. The first through-hole is disposed opposite at least one of the first fastening holes. The second through-hole is disposed opposite at least one of the second fastening holes when the first through-hole is disposed opposite the at least one of the first fastening holes. The fastening member includes a first fastening member and a second fastening member. The first fastening member is inserted through the first through-hole and tightened into one of the first fastening holes. The second fastening member is inserted through the second through-hole and tightened into one of the second fastening holes. The operator uses the first fastening member and the second fastening member, which is disposed below the first fastening member, to fix the upper drive mechanism to the upper mounting base. Therefore, the cloth bonding device is able to fix the upper drive mechanism even more securely to the upper mounting base.

The guide portion may also include a pair of rails. The pair of the rails are arranged facing each other with an interval in the up-down direction and extend in the specified direction. Each one of the pair of the rails guides the upper drive mechanism in the specified direction. Therefore, the cloth bonding device can improve the operability of the moving of the upper drive mechanism in the specified direction.

The upper drive mechanism may also include an upper base, an upper motor, an upper arm base, an upper arm, and an upper driving force transmission portion. The upper base is fixed to the upper mounting base. The upper base is provided with the through-hole. The upper motor is provided on the upper base. The upper arm base extends downward from the upper base. The upper arm has one end coupled to the upper arm base and another end supporting the upper roller. The upper driving force transmission portion is provided in the upper arm base and the upper arm and transmits the driving force of the upper motor to the upper roller. The operator can remove the upper drive mechanism by removing the upper base from the upper mounting base after the fastening member has been removed. Therefore, the cloth bonding device can simplify maintenance work on the upper drive mechanism.

The nozzle may also include a first nozzle and a second nozzle. The second nozzle has a different discharge width from that of the first nozzle, the discharge width being the width, in the specified direction, of the adhesive discharged from the nozzle. In this case, the support body may support one of the first nozzle and the second nozzle in attachable and detachable manner. When replacing one of the first nozzle and the second nozzle with the other nozzle, the operator is able to align the center of the discharge width of the nozzle with the center of the upper roller in the specified direction. Therefore, the cloth bonding device can easily discharge the adhesive onto the ideal area on the cloth.

The cloth bonding device may also include a lower drive mechanism, a lower mounting base, and a second fixing portion. The lower drive mechanism supports the lower roller and rotationally drives the lower roller. The lower mounting base is fixed to the base portion. The lower drive mechanism is fixed to the lower mounting base. The second fixing portion fixes the lower drive mechanism in one of fixing positions that are lined up in the specified direction. The second fixing portion may include an insertion hole, a threaded member, and threaded holes. The threaded holes are provided in the lower drive mechanism and discretely disposed in the specified direction. The insertion hole is provided in the lower mounting base and disposed opposite at least one of the threaded holes. The threaded member is inserted through the insertion hole and tightened into one of the threaded holes. The lower drive mechanism can be fixed to the lower mounting base in one of the fixing positions. The operator is able to align the center of the discharge width of the nozzle with the center of the lower roller in the specified direction. Therefore, the cloth bonding device can discharge the adhesive onto the ideal area on the cloth even more easily.

The insertion hole may also be an oblong hole having a long axis extending in the specified direction. The insertion hole is easily disposed opposite at least one of the threaded holes. Therefore, the cloth bonding device can improve the operability of the fixing of the lower drive mechanism to the lower mounting base.

The lower drive mechanism may also include a lower base, a lower motor, a lower arm, and a lower driving force transmission portion. The lower base is fixed to the lower mounting base. The lower base is provided with the threaded holes. The lower motor is provided on the lower base. The lower arm extends upward from the lower base. An upper end of the lower arm supports the lower roller. The lower driving force transmission portion is provided in the lower base and the lower arm and transmits the driving force of the lower motor to the lower roller. The operator can remove the lower drive mechanism by removing the lower base from the lower mounting base after the threaded member has been removed. Therefore, the cloth bonding device can simplify maintenance work on the lower drive mechanism.

### BRIEF DESCRIPTION OF THE DRAWINGS

Embodiments will be described below in detail with reference to the accompanying drawings in which:
FIG. 1 is an oblique view of a cloth bonding device 1;
FIG. 2 is an oblique view of the cloth bonding device 1 that shows the interior of an arm portion 4;
FIG. 3 is a left side view of the cloth bonding device 1 with a nozzle 40 in a proximate position;
FIG. 4 is a left side view of the cloth bonding device 1 with the nozzle 40 in a retracted position;
FIG. 5 is an exploded oblique view of a lever 9 and the nozzle 40;
FIG. 6 is a front view of the lever 9, on which the nozzle 40 is mounted;
FIG. 7 is an exploded oblique view of the cloth bonding device 1;
FIG. 8 is a rear view of an upper drive mechanism 15 in a first position;
FIG. 9 is a rear view of a lower drive mechanism 25 in a first specified position;
FIG. 10 is a rear view of the upper drive mechanism 15 in a second position;
FIG. 11 is a rear view of the lower drive mechanism 25 in a second specified position; and
FIG. 12 is a front view of the lever 9, on which a nozzle 50 is mounted.

### DETAILED DESCRIPTION

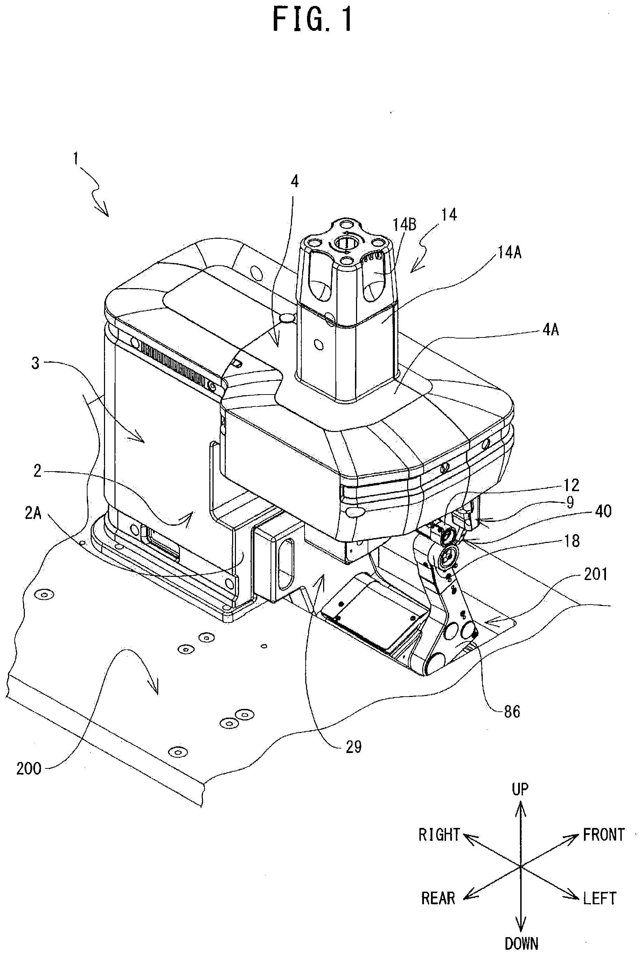

The explanation that follows uses the terms up, down, left, right, front, and rear for the directions that are indicated by the arrows in the drawings. A cloth bonding device 1 that is shown in FIG. 1 bonds an upper cloth and a lower cloth, which are disposed facing one another with an adhesive between them, by pressing them together while they are clamped between and fed by an upper roller 12 and a lower roller 18. The direction in which the upper cloth and the lower cloth are fed by the cloth bonding device 1 is the front-to-rear direction.

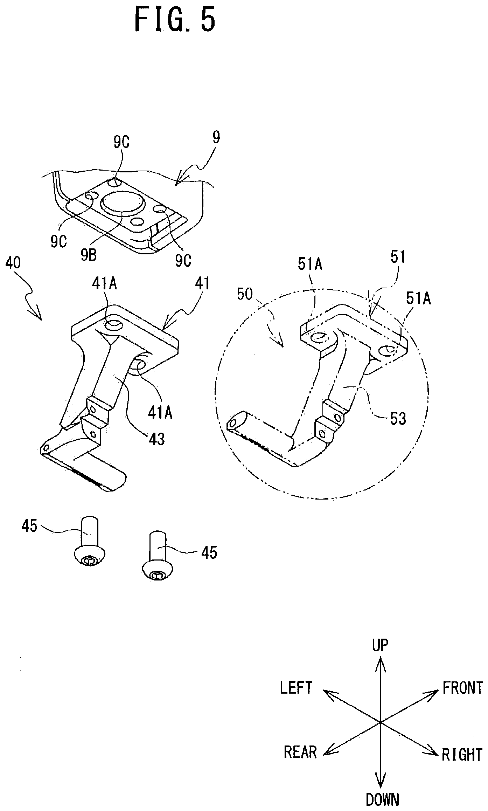

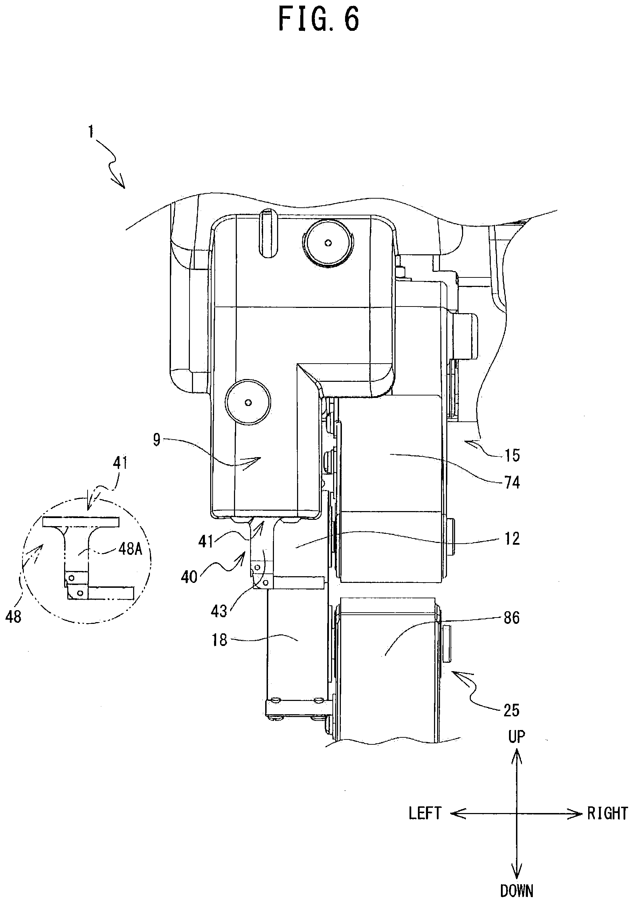

The configuration of the cloth bonding device 1 will be explained with reference to FIGS. 1 to 9. Any one of nozzles 40, 48 (refer to FIG. 6), and 50 (refer to FIG. 5) is removably mounted in the cloth bonding device 1. Hereinafter, the configuration of the cloth bonding device 1 when the nozzle 40 is mounted will be explained.

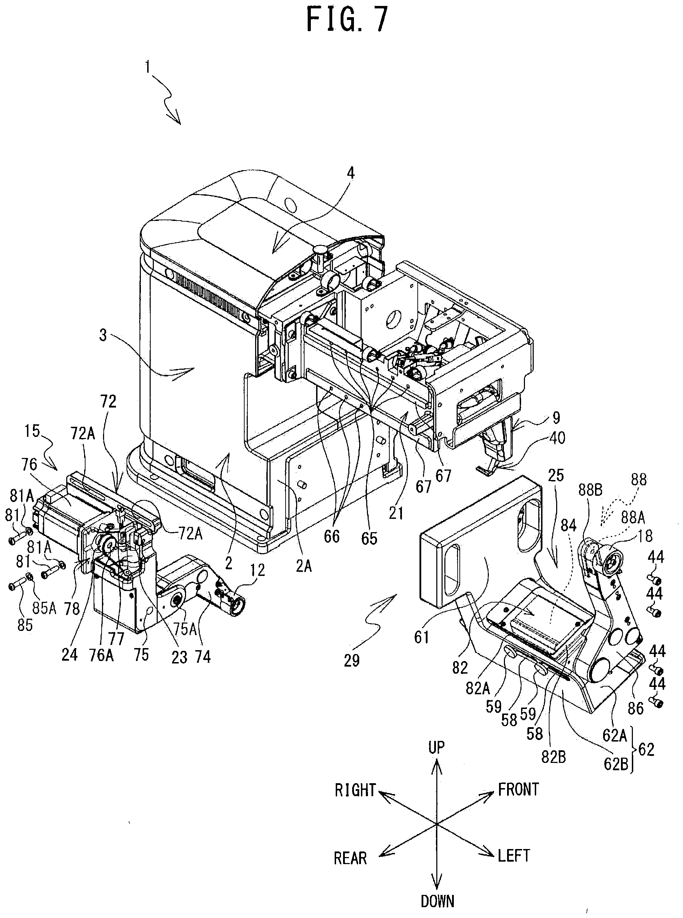

As shown in FIG. 1, the cloth bonding device 1 is installed on the top face of a work bench 200. The cloth bonding device 1 includes a base portion 2, a pillar portion 3, an arm portion 4, a lever 9, the nozzle 40, an upper mounting base 21 (refer to FIG. 7), an upper drive mechanism 15, a lower mounting base 29, a lower drive mechanism 25, and the like.

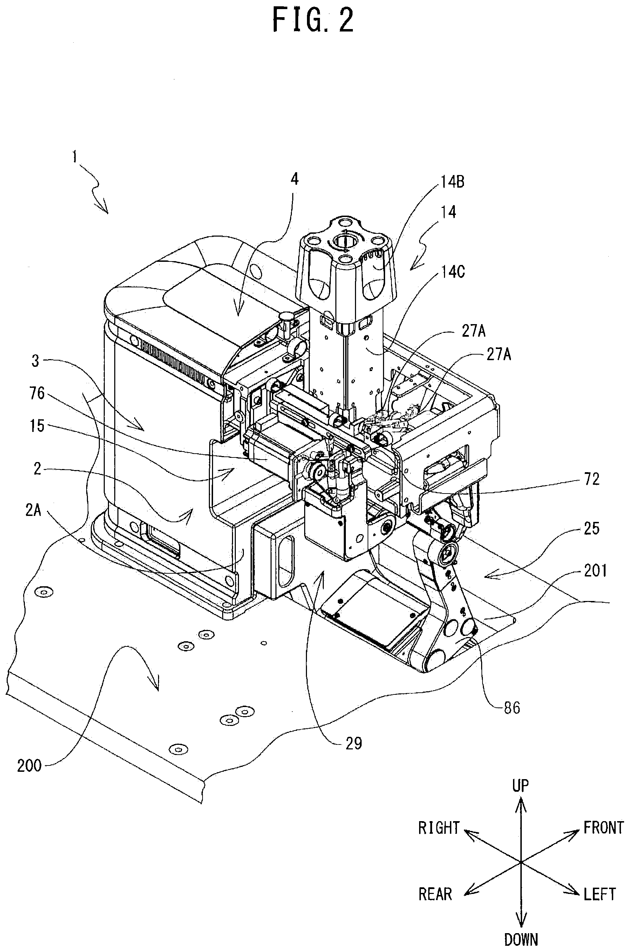

As shown in FIG. 2, the base portion 2 has a substantially three-dimensional rectangular shape and is fixed to the top face of the work bench 200 by screws. The base portion 2 is provided with an attachment face 2A on its left side. The attachment face 2A is parallel to the vertical direction. The attachment face 2A is located on the right of an opening 201 in the work bench 200. The pillar portion 3 is a substantially square column that extends vertically upward from the top face of the base portion 2. The arm portion 4 extends to the left from the upper end of the pillar portion 3. The arm portion 4 extends in the left-right direction such that it faces the base portion 2. The arm portion 4 is provided with a removable cover 4A on its left end and is provided with a command switch on the lower part of its front face. The command switch accepts an operation to move the nozzle 40 to a proximate position or a retracted position, for example.

As shown in FIGS. 2 to 4, the arm portion 4 includes a gear pump, a cartridge mounting portion 14, a lever swinging mechanism 16, and the like inside the cover 4A (refer to FIG. 1). The gear pump is provided in the left front side of the interior of the arm portion 4. The gear pump is provided with a supply channel for the adhesive in its interior. The gear pump is driven by a pump motor to draw an appropriate amount of the adhesive from the cartridge mounting portion 14 and to supply the adhesive, through a flow channel in the interior of a pivotal shaft 9A, to a supply channel 9B of the lever 9 (refer to FIG. 5), which will be described later. The pump motor is provided on the right of the gear pump and is positioned inside the arm portion 4.

The cartridge mounting portion 14 is provided to the rear of the gear pump and includes a main body 14A and a lid 14B. The main body 14A covers a periphery of a storage portion 14C. The storage portion 14C extends in the up-down direction and is a bottomed square cylinder whose top portion is open. A cartridge is mounted inside the storage portion 14C such that it can be removed. The cartridge contains a hot melt adhesive. When the cartridge is mounted, the storage portion 14C is able to supply the adhesive to the gear pump. The hot melt adhesive liquefies when it is heated to a specified temperature and hardens at a temperature lower than the specified temperature. The storage portion 14C is provided with a pair of heaters on both sides of the cartridge. The pair of the heaters heat the cartridge. The adhesive therefore melts and liquefies. The lid 14B can be mounted on and removed from the top portion of the storage portion 14C and opens and closes the opening in the top portion of the storage portion 14C.

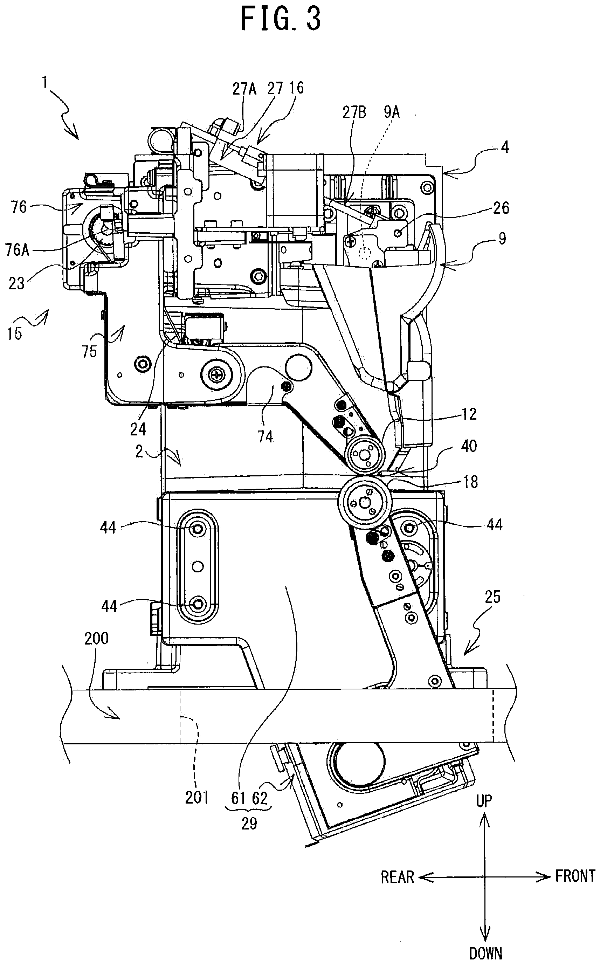

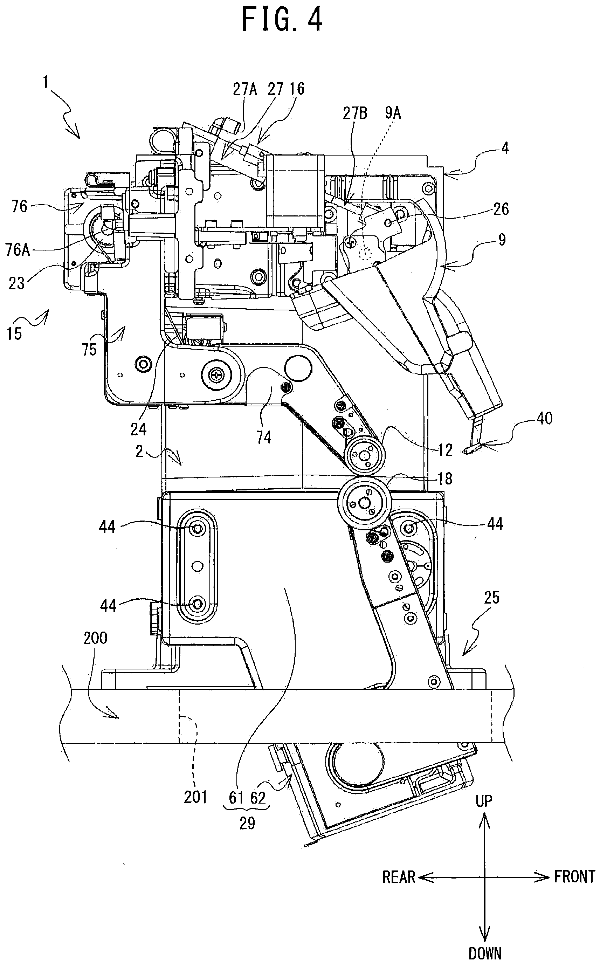

As shown in FIGS. 3 and 4, the lever 9 is arm-shaped and extends downward from the front end of the bottom face of the arm portion 4. The pivotal shaft 9A supports the lever 9 such that the lever 9 can swing. The pivotal shaft 9A extends in the left-right direction, and its right end is connected to the gear pump. The lower end of the lever 9 can swing in the front-rear direction around the pivotal shaft 9A. The nozzle 40 can be mounted on and removed from the lower end of the lever 9, which supports the nozzle 40.

The supply channel 9B for the adhesive (refer to FIG. 5) is provided in the interior of the lever 9. The upper end of the supply channel 9B is connected to the flow channel in the interior of the pivotal shaft 9A. The supply channel 9B supplies to the nozzle 40 the adhesive that the gear pump supplies through the flow channel. The lever 9 is provided with a bar-shaped heater in the vicinity of the supply channel. The heater heats the adhesive that flows through the supply channel 9B.

The lever swinging mechanism 16 is provided on the left end of the arm portion 4. The lever swinging mechanism 16 includes an air cylinder 27 and a coupling shaft 26. The air cylinder 27 is adjacent to the left side of the storage portion 14C of the cartridge mounting portion 14. The air cylinder 27 is provided with two air inlets 27A (refer to FIG. 2) to the front and the rear. The two air inlets 27A are connected to intake-exhaust hoses. The cloth bonding device 1 controls the intake of compressed air from the intake-exhaust hoses to the air inlets 27A and the exhaust of air from the air inlets 27A to the intake-exhaust hoses. A piston in the interior of the air cylinder 27 is moved by the control of the intake and exhaust. The piston is connected to a movable portion 27B. The movable portion 27B is rod-shaped and extends downward toward the front from the piston. When the piston moves, the movable portion 27B moves toward the front and the rear. The coupling shaft 26 is provided on a tip end of the movable portion 27B and extends in the left-right direction. The coupling shaft 26 is rotatably coupled to the lever 9 at a position that is set apart from the pivotal shaft 9A upward and to the front.

When the movable portion 27B of the air cylinder 27 moves downward toward the front, the lever 9 swings around the pivotal shaft 9A, and the nozzle 40 moves to the proximate position (refer to FIG. 3). When the movable portion 27B of the air cylinder 27 moves upward toward the rear, the lever 9 swings around the pivotal shaft 9A, and the nozzle 40 moves to the retracted position (refer to FIG. 4). In the proximate position, the nozzle 40 is close to the front side of the outer circumferential face of the lower roller 18. The cloth bonding device 1 moves the nozzle 40 to the proximate position when the operator performs the bonding operation on the upper cloth and the lower cloth. In the retracted position, the nozzle 40 is a significant distance away from the outer circumferential face of the lower roller 18 toward the front.

As shown in FIG. 5, the nozzle 40 includes a mounting portion 41 and an extension portion 43. The mounting portion 41 is substantially rectangular in a plan view. The mounting portion 41 is provided with two insertion holes 41A near its left front edge and its right rear edge. The two insertion holes 41A extend through the mounting portion 41 in the up-down direction, and they are positioned opposite two of four threaded holes 9C. The four threaded holes 9C are provided in the bottom face of the lever 9. Screws 45 that are inserted into the two insertion holes 41A are tightened into the two threaded holes 9C. The nozzle 40 is thus mounted on the bottom face of the lever 9.

The extension portion 43 extends toward the lower rear from the mounting portion 41 and extends to the right from its lower end. A supply channel for the adhesive is provided in the interior of the extension portion 43. The supply channel of the extension portion 43 is continuous with the supply channel 9B. Discharge outlets are provided in the bottom face of the extension portion 43. The discharge outlets are arrayed in the left-right direction on the right of the supply channel 9B, and they discharge the adhesive that is supplied through the supply channel of the extension portion 43. Therefore, the nozzle 40 discharges the adhesive onto the lower cloth on the right of the supply channel 9B. The width of the adhesive discharged from the nozzle 40 may be 10 millimeters, for example. The discharge width is the left-right width of the adhesive that is discharged onto the lower cloth.

As shown in FIGS. 5 and 6, the nozzle 40 can be replaced with one of a nozzle 50 and a nozzle 48. The nozzle 50 differs from the nozzle 40 in that the adhesive is discharged on the left of the supply channel 9B. The operator replaces the nozzle 40 with the nozzle 50 in accordance with the bonding process of the cloth bonding device 1.

The nozzle 50 includes a mounting portion 51 and an extension portion 53. The mounting portion 51 is substantially rectangular in a plan view. The mounting portion 51 is provided with insertion holes 51A near its right front edge and its left rear edge. The two insertion holes 51A extend through the mounting portion 51 in the up-down direction, and they are positioned opposite two of the four threaded holes 9C. The two threaded holes 9C that are opposite to the two insertion holes 51A are different from the two threaded holes 9C that are opposite to the two insertion holes 41A of the mounting portion 41 of the nozzle 40. The inside diameters of the insertion holes 51A are the same as the inside diameters of the insertion holes 41A. Each of two screws 45 is inserted into corresponding one of the two insertion holes 51A and is tightened into corresponding one of the two threaded holes 9C. The extension portion 53 extends toward the lower rear from the mounting portion 51 and extends to the left from its lower end. A supply channel and discharge outlets are provided in the extension portion 53 in the same manner as in the extension portion 43. The width of the adhesive discharged from the nozzle 50 may be 10 millimeters, for example.

As shown in FIG. 6, the nozzle 48 includes an extension portion 48A instead of the extension portion 43, but is otherwise configured in the same manner as the nozzle 40. The extension portion 48A extends toward the lower rear from the mounting portion 41 and extends to the right from its lower end. In the same manner as the nozzle 40, the nozzle 48 discharges the adhesive on the right of the supply channel 9B (refer to FIG. 5). The width of the adhesive discharged from the nozzle 48 may be 8 millimeters, for example, which is a shorter discharge width than that of the nozzle 40. The operator replaces the nozzle 40 with the nozzle 48 in accordance with the bonding process of the cloth bonding device 1.

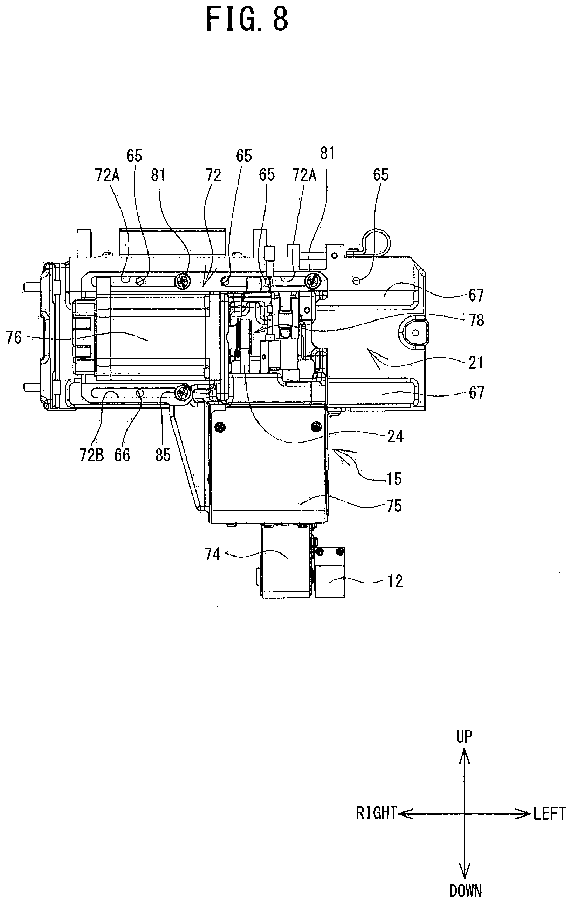

The configurations of the upper mounting base 21 and the upper drive mechanism 15 will be explained with reference to FIGS. 7 and 8. The cartridge mounting portion 14 (refer to FIG. 2) is not shown in FIG. 7. The upper mounting base 21 is provided in the rear part of the interior of the arm portion 4. The upper mounting base 21 is substantially rectangular in a rear view and is provided with a pair of rails 67, first fastening holes 65, and second fastening holes 66. The pair of the rails 67 are provided on the rear face of the upper mounting base 21 and extend to the left and the right. The pair of the rails 67 are arranged facing each other with an interval in the up-down direction. The first fastening holes 65 are disposed above the pair of the rails 67 and discretely arrayed in the left-right direction. The second fastening holes 66 are provided in the lower rail 67 of the pair of the rails 67. The second fastening holes 66 are discretely arrayed in the left-right direction.

The upper drive mechanism 15 is fixed to the upper mounting base 21. The upper drive mechanism 15 supports and rotationally drives the upper roller 12. The upper drive mechanism 15 includes an upper base 72, an upper motor 76, an upper arm base 75, an upper arm 74, and an upper driving force transmission portion 78. The upper base 72 is substantially rectangular in a rear view and faces the upper mounting base 21. The upper base 72 is provided with a carrier portion, a second through-hole 72B, and two first through-holes 72A. The carrier portion is provided on the upper edge of the front face of the upper base 72 and projects toward the front. By engaging with the upper rail 67 of the pair of the rails 67, the carrier portion carries the upper base 72 on the top face of the upper rail 67.

The second through-hole 72B and the two first through-holes 72A are oblong holes whose long axes extend in the left-right direction, and they extend through the upper base 72 in the front-rear direction. The two first through-holes 72A are provided in the upper part of the upper base 72, with a interval separating them in the left-right direction. Each one of the two first through-holes 72A is opposite at least one of the first fastening holes 65. The second through-hole 72B is provided below the two first through-holes 72A. The second through-hole 72B is opposite at least one of the second fastening holes 66. The short axes of the first through-holes 72A and the second through-hole 72B are slightly longer than the diameters of the first fastening holes 65 and the second fastening holes 66.

A second fastening member 85 and two first fastening members 81 may be screws, for example. Each of the two first fastening members 81 is inserted through a washer 81A and through corresponding one of the two first through-holes 72A, then tightened into corresponding one of the first fastening holes 65. The second fastening member 85 is inserted through a washer 85A and through the second through-hole 72B, then tightened into one of the second fastening holes 66. The upper drive mechanism 15 is thus fixed to the upper mounting base 21.

The upper arm base 75 has an L-shaped box shape in a left side view, extending downward from the lower edge of the upper base 72 then bending toward the front. The upper arm base 75 is formed as a single unit with the upper base 72. A front end portion 75A on the lower end of the upper arm base 75 is coupled to the upper arm 74 such that the upper arm 74 can rotate. The upper arm 74 extends toward the front from the point where it is coupled to the front end portion 75A of the upper arm base 75, and its front end bends and extends downward toward the front. The front end of the upper arm 74 supports the upper roller 12 such that the upper roller 12 can rotate. The upper roller 12 is disposed downstream from the nozzle 40 in the feed direction and above the work bench 200. The upper motor 76 is fixed to the rear face of the upper base 72. The upper motor 76 is provided with a drive shaft 76A. The rear end of the upper arm 74 is coupled to a movable portion of an air cylinder 77 such that the upper arm 74 can rotate. The air cylinder 77 is disposed inside the upper arm base 75 and is provided with an air inlet. An intake-exhaust hose is connected to the air inlet. The cloth bonding device 1 controls the intake of compressed air from the intake-exhaust hose to the air inlet and the exhaust of air from the air inlet to the intake-exhaust hose. A piston in the interior of the air cylinder 77 is moved by the control of the intake and exhaust. The lower end of the piston is connected to the rear end of the upper arm 74. When the piston moves, the upper arm 74 swings around the point where it is coupled to the front end portion 75A of the upper arm base 75.

The upper driving force transmission portion 78 includes a drive pulley 23, a first follower pulley, a first synchronization belt 24, a second follower pulley, a second synchronization belt, third follower pulley, and the like. The drive pulley 23 is fixed to the drive shaft 76A of the upper motor 76. The first synchronization belt 24 and the first follower pulley are provided in the interior of the upper arm base 75. The second follower pulley, the second synchronization belt, and the third follower pulley are provided in the interior of the upper arm 74. The first synchronization belt 24 spans the interval between the drive pulley 23 and the first follower pulley. The first follower pulley is provided on the front end portion 75A of the upper arm base 75. The second follower pulley is provided on the rotating shaft of the first follower pulley, in the interior of the upper arm 74. The third follower pulley is fixed to the rotating shaft of the upper roller 12. The second synchronization belt spans the interval between the second follower pulley and the third follower pulley. The driving force of the upper motor 76 is thus transmitted to the upper roller 12 through the drive pulley 23, the first synchronization belt 24, the first follower pulley, the second follower pulley, the second synchronization belt, and the third follower pulley, such that the upper roller 12 rotates clockwise in a left side view.

When the operator loosens the second fastening member 85 and the two first fastening members 81, the upper base 72 can be moved to the left and the right in a state in which the carrier portion is carried by the upper rail 67. In other words, the upper drive mechanism 15 can be moved to the left and the right. The range of movement of the upper drive mechanism 15 is the range of movement of the upper base 72, which is the range in which the first through-holes 72A are opposite the first fastening holes 65 into which the first fastening members 81 have been tightened and in which the second through-hole 72B is opposite the second fastening hole 66 into which the second fastening member 85 has been tightened. In FIG. 8, the upper drive mechanism 15 is positioned in a first position (the same as in FIG. 6). The first position is the position of the upper drive mechanism 15 in the left-right direction where the center of the upper roller 12 in the left-right direction is substantially aligned with the center of the discharge width of the nozzle 40 in the left-right direction.

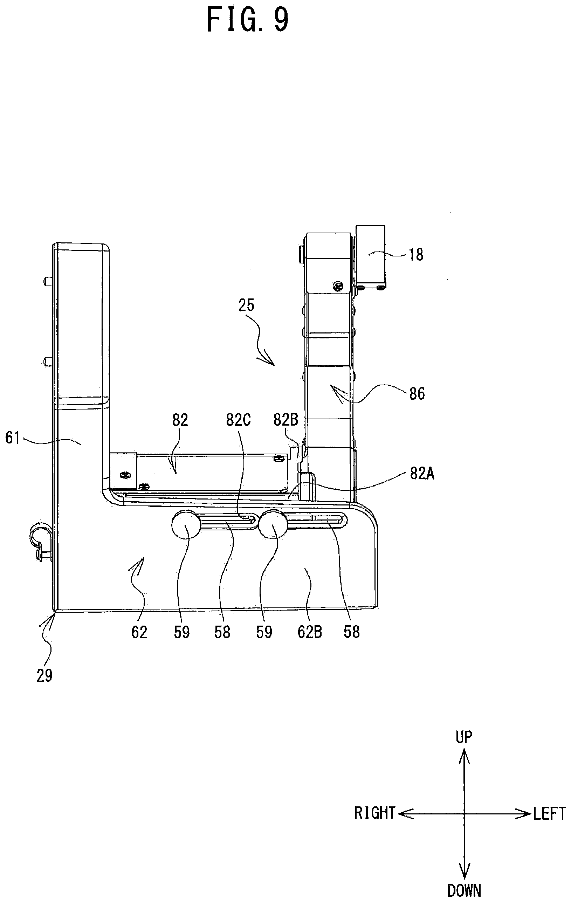

The configurations of the lower mounting base 29 and the lower drive mechanism 25 will be explained with reference to FIGS. 7 and 9. The lower mounting base 29 is inserted from above into the inner side of the opening 201 (refer to FIG. 1) of the work bench 200 and is fixed to the attachment face 2A of the base portion 2. The lower mounting base 29 includes a first mounting base 61 and a second mounting base 62. The first mounting base 61 has an upper part that is substantially rectangular in a left side view and a lower part that bends and extends downward toward the front from the upper part. The upper part of the first mounting base 61 is fixed to the attachment face 2A by four screws 44, for example. When fixed to the attachment face 2A, the first mounting base 61 extends to the underside of the work bench 200 (refer to FIG. 3) through the inner side of the opening 201 (refer to FIG. 1). The second mounting base 62 extends toward the left from the lower part of the first mounting base 61. The second mounting base 62 includes a support portion 62A and a rising portion 62B. The support portion 62A is a plate-shaped member that is substantially rectangular in a plan view. The support portion 62A supports the lower drive mechanism 25 from below. The rising portion 62B is a plate-shaped member that is substantially rectangular in a rear view, and it extends upward toward the rear from the rear edge of the support portion 62A. The upper part of the rising portion 62B is provided with two insertion holes 58. The two insertion holes 58 are oblong holes whose long axes extend in the left-right direction, and they extend through the rising portion 62B. The two insertion holes 58 are arrayed in the left-right direction with an interval between them.

The lower drive mechanism 25 supports and rotationally drives the lower roller 18. The lower drive mechanism 25 includes a motor containing portion 82, a lower motor 84, a lower arm 86, and a lower driving force transmission portion 88. The motor containing portion 82 is box-shaped and is supported by the support portion 62A of the second mounting base 62. The motor containing portion 82 contains the lower motor 84 (refer to FIG. 7) in its interior. The motor containing portion 82 includes a rear wall portion 82A and a left wall portion 82B. The rear wall portion 82A faces the rising portion 62B. The left wall portion 82B extends toward the front from the left end of the rear wall portion 82A. The left wall portion 82B supports the lower arm 86 and the lower driving force transmission portion 88. The drive shaft of the lower motor 84 projects to the left of the left wall portion 82B.

The lower arm 86 is substantially L-shaped in a right side view, and it extends upward toward the front from the left wall portion 82B, then bends at its front end and extends upward toward the rear. The upper end of the lower arm 86 passes through the opening 201 (refer to FIG. 2) and extends above the work bench 200. At its upper end, the lower arm 86 supports the lower roller 18 such that the lower roller 18 can rotate. The lower roller 18 is disposed downstream from the nozzle 40 in the feed direction and faces the upper roller 12.

The lower driving force transmission portion 88 is provided in the interior of the lower arm 86, and it transmits the driving force of the lower motor 84 to the lower roller 18. The lower driving force transmission portion 88 includes a drive pulley, a follower pulley 88A, a synchronization belt 88B, and the like. The drive pulley is fixed to the drive shaft of the lower motor 84. The follower pulley 88A is fixed to the rotating shaft of the lower roller 18. The synchronization belt 88B travels in conjunction with the rotation of the drive pulley and rotates the follower pulley 88A. The driving force of the lower motor 84 is transmitted to the lower roller 18 through the drive pulley, the synchronization belt 88B, and the follower pulley 88A, and the lower roller 18 rotates counterclockwise in a left side view. The lower roller 18 and the upper roller 12 clamp the upper cloth and the lower cloth between them. The lower roller 18 operates in coordination with the upper roller 12 to feed the upper cloth and the lower cloth in the feed direction.

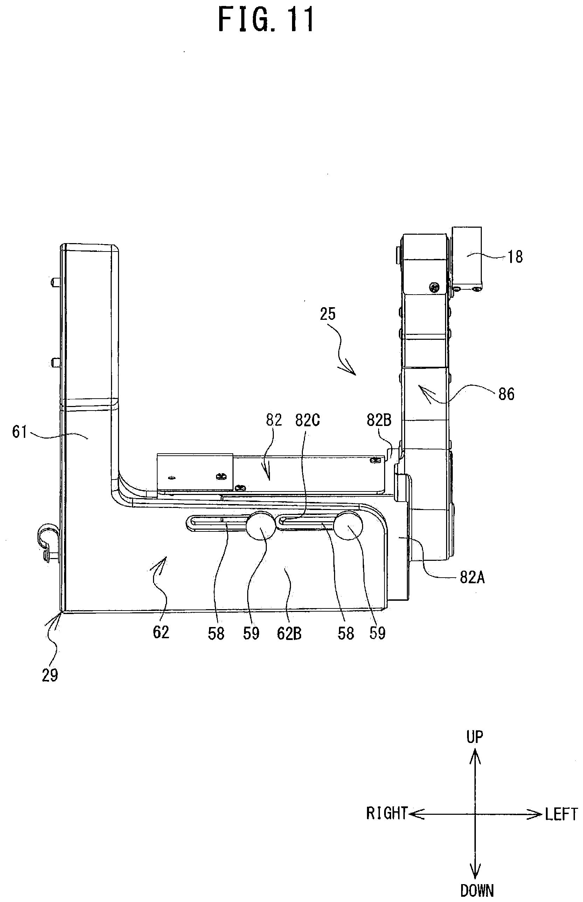

As shown in FIG. 9, threaded holes 82C are provided in the rear wall portion 82A of the motor containing portion 82. In FIG. 9, one of the threaded holes 82C is shown (the same as in FIG. 11). The threaded holes 82C are discretely arrayed in the left-right direction. Each one of the two insertion holes 58 in the rising portion 62B is opposite at least one of the threaded holes 82C. The short axes of the two insertion holes 58 are slightly longer than the diameters of the threaded holes 82C.

Each one of two threaded members 59 is passed through one of the two insertion holes 58 and tightened into one of the threaded holes 82C. The lower drive mechanism 25 is thus fixed to the lower mounting base 29. When the operator loosens the two threaded members 59, the motor containing portion 82 can be moved to the left and the right in a state in which it is supported by the support portion 62A. In other words, the lower drive mechanism 25 can be moved to the left and the right. The range of movement of the lower drive mechanism 25 is the range of movement of the motor containing portion 82. The range of movement of the motor containing portion 82 is the range in which two of the threaded holes 82C are opposite the two insertion holes 58. In FIG. 9, the lower drive mechanism 25 is positioned in a first specified position (the same as in FIG. 6). The first specified position is the position of the lower drive mechanism 25 in the left-right direction where the center of the lower roller 18 in the left-right direction is substantially aligned with the center of the discharge width of the nozzle 40 in the left-right direction.

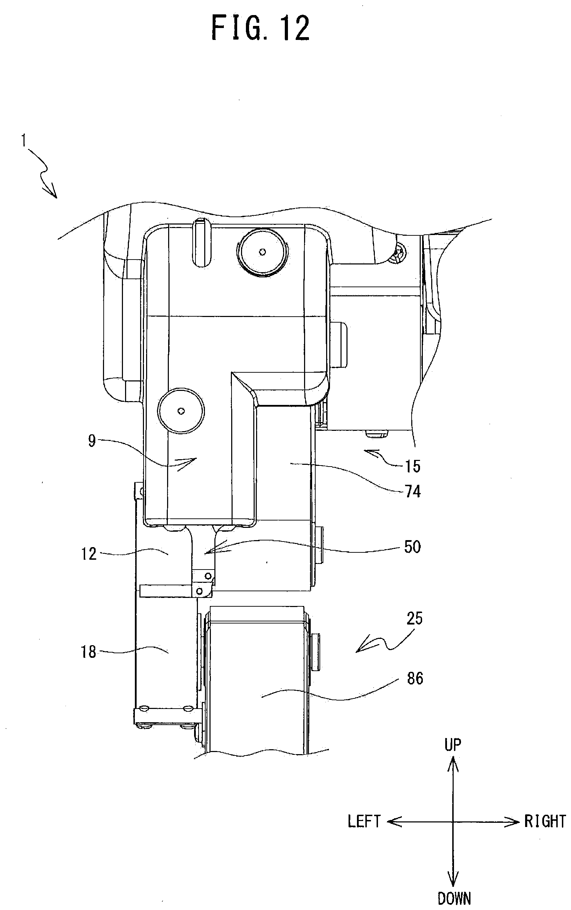

The method for replacing the nozzle 40 of the cloth bonding device 1 with the nozzle 50 will be explained with reference to FIGS. 5 and 8 to 12. The operator operates the command switch to swing the lever 9 and move the nozzle 40 from the proximate position (refer to FIG. 3) to the retracted position (refer to FIG. 4). As shown in FIG. 5, the operator loosens and removes the two screws 45, then removes the nozzle 40 from the lever 9. The operator mounts the nozzle 50 onto the lever 9 using the two screws 45 (refer to FIG. 12). The operator operates the command switch to swing the lever 9 and move the nozzle 50 from the retracted position to the proximate position. As described previously, the direction in which the extension portion 53 of the nozzle 50 extends is different from the direction in which the extension portion 43 of the nozzle 40 extends. In other words, when the nozzle 50 is mounted on the lever 9, the position in the left-right direction of the discharge outlets that discharge the adhesive is different from the position of the discharge outlets of the nozzle 40. The adhesive discharge outlets of the nozzle 50 are positioned to the left of the adhesive discharge outlets of the nozzle 40.

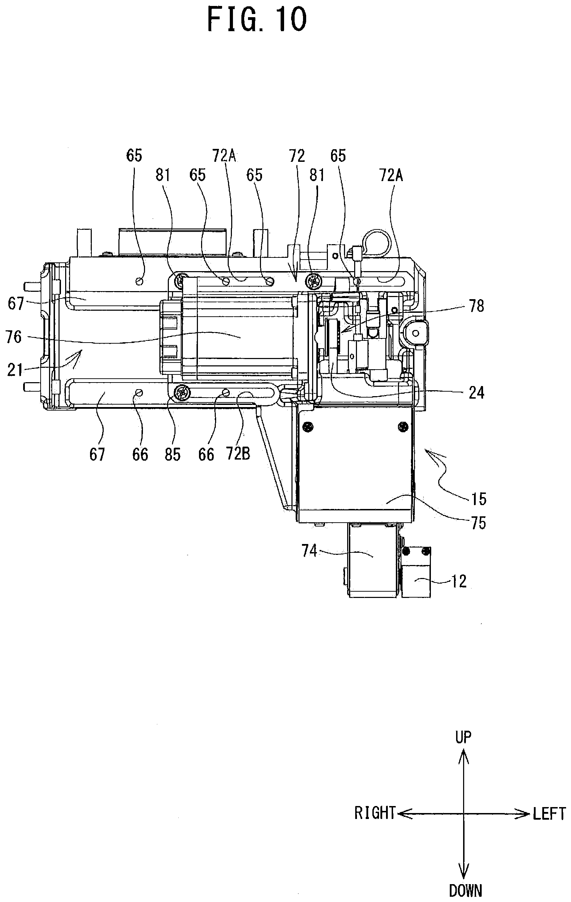

As shown in FIGS. 8, 10, and 12, the operator loosens the two tightened first fastening members 81 to the extent that they do not fall out of the corresponding first fastening holes 65. The operator loosens the tightened second fastening member 85 to the extent that it does not fall out of the second fastening hole 66. The first through-holes 72A and the second through-hole 72B are each oblong holes whose long axes extend in the left-right direction, so the upper base 72 is able to move to the left in a state in which it is carried on the pair of the rails 67. The operator moves the upper drive mechanism 15 to the left along the pair of the rails 67 from the first position (refer to FIGS. 6, 8) to a second position (refer to FIGS. 10, 12). The second position is the position of the upper drive mechanism 15 in the left-right direction where the center of the upper roller 12 in the left-right direction is substantially aligned with the center of the discharge width of the nozzle 50 in the left-right direction. After moving the upper drive mechanism 15 to the second position, the operator once again tightens the two first fastening members 81 and the second fastening member 85 into their respective fastening holes. The upper drive mechanism 15 is fixed to the upper mounting base 21 in the second position.

When the operator moves the upper drive mechanism 15 from the first position to the second position, the two first fastening members 81 may be tightened into different ones of the first fastening holes 65 from the ones into which they were tightened previously. In the same manner, when the operator moves the upper drive mechanism 15 from the first position to the second position, the second fastening member 85 may be tightened into a different one of the second fastening holes 66 from the one into which it was tightened previously.

When the operator has moved the upper drive mechanism 15 to the second position, it is necessary for the position of the lower drive mechanism 25 to be changed such that the lower roller 18 will be disposed opposite the upper roller 12. As shown in FIGS. 9, 11, and 12, the operator loosens and removes the two threaded members 59. The operator moves the lower drive mechanism 25 to the left from the first specified position (refer to FIGS. 6, 9) to a second specified position (refer to FIGS. 11, 12). The second specified position is the position of the lower drive mechanism 25 in the left-right direction where the center of the lower roller 18 in the left-right direction is substantially aligned with the center of the discharge width of the nozzle 50 in the left-right direction. The operator inserts each of the two threaded members 59 through corresponding one of the two insertion holes 58 and tightens it into corresponding one of the two threaded holes 82C. The lower drive mechanism 25 is fixed to the lower mounting base 29 in the second specified position. The positions of the threaded holes 82C into which the threaded members 59 are tightened when the lower drive mechanism 25 is in the second specified position are different from their positions when the lower drive mechanism 25 is in the first specified position.

The method for replacing the nozzle 40 of the cloth bonding device 1 with the nozzle 48 will be explained with reference to FIGS. 6, 9, and 10. The explanation will be simplified where the work is the same as for replacing the nozzle 40 with the nozzle 50. The operator swings the lever 9 and moves the nozzle 40 from the proximate position to the retracted position, then removes the nozzle 40 (refer to FIG. 6) from the lever 9. The operator fixes the nozzle 48 (refer to FIG. 6) to the lever 9. The operator swings the lever 9 and moves the nozzle 48 from the retracted position to the proximate position. As explained previously, the nozzle 48 has a different adhesive discharge width from that of the nozzle 40. That is, when the nozzle 48 is mounted on the lever 9, the center of its discharge width in the left-right direction is in a different position from that of the nozzle 40. The position of the center of the discharge width of the nozzle 48 in the left-right direction is to the left of the position of the center of the discharge width of the nozzle 40 in the left-right direction.

As shown in FIG. 8, the operator loosens the two tightened first fastening members 81 and the tightened second fastening member 85 to the extent that they do not fall out of the corresponding first fastening holes 65 and the corresponding second fastening hole 66. The operator moves the upper drive mechanism 15 to the left along the pair of the rails 67 from the first position to a third position (refer to FIG. 8). The third position is the position of the upper drive mechanism 15 in the left-right direction where the center of the upper roller 12 in the left-right direction is substantially aligned with the center of the discharge width of the nozzle 48 in the left-right direction. The third position is situated between the first position and the second position (refer to FIG. 10). After moving the upper drive mechanism 15 to the third position, the operator once again tightens the two first fastening members 81 and the second fastening member 85 into their respective fastening holes. The upper drive mechanism 15 is fixed to the upper mounting base 21 in the third position.

The first fastening holes 65 into which the operator tightens the first fastening members 81 when the upper drive mechanism 15 is in the third position are different from those into which the operator tightens the first fastening members 81 when the upper drive mechanism 15 is in the first position. In the same manner, the second fastening hole 66 into which the operator tightens the second fastening member 85 when the upper drive mechanism 15 is in the third position is different from that into which the operator tightens the second fastening member 85 when the upper drive mechanism 15 is in the first position.

When the operator has moved the upper drive mechanism 15 to the third position, it is necessary for the position of the lower drive mechanism 25 to be changed such that the lower roller 18 will be disposed opposite the upper roller 12. As shown in FIG. 9, the operator loosens and removes the two threaded members 59, then moves the lower drive mechanism 25 to the left from the first specified position (refer to FIG. 9) to a third specified position. The third specified position is the position of the lower drive mechanism 25 in the left-right direction where the center of the lower roller 18 in the left-right direction is substantially aligned with the center of the discharge width of the nozzle 48 in the left-right direction. The third specified position is situated between the first specified position and the second specified position (refer to FIG. 11). The operator inserts each of the two threaded members 59 through corresponding one of the two insertion holes 58 and tightens it into corresponding one of the two threaded holes 82C. The lower drive mechanism 25 is fixed to the lower mounting base 29 in the third specified position.

The method for removing the upper drive mechanism 15 and the lower drive mechanism 25 will be explained with reference to FIG. 7. The operator removes the upper base 72 from the upper mounting base 21 by removing the first fastening members 81 and the second fastening member 85. That makes it possible for the operator to remove the upper drive mechanism 15 from the upper mounting base 21. The operator can remove the motor containing portion 82 from the lower mounting base 29 by removing the two threaded members 59 (refer to FIG. 9). That makes it possible for the operator to remove the lower drive mechanism 25 from the lower mounting base 29.

As explained above, by loosening the two first fastening members 81 and the second fastening member 85, the operator can adjust the position in the left-right direction at which the upper drive mechanism 15 is fixed to the upper mounting base 21. Therefore, when mounting the nozzle 50 on the lever 9 instead of the nozzle 40, the operator is able to move the upper drive mechanism 15 such that the center of the upper roller 12 in the left-right direction is substantially aligned with the center of the discharge width of the nozzle 50 in the left-right direction. It is not necessary to replace the lever 9 with another lever that is compatible with the nozzle 50. The cloth bonding device 1 is thus able to simplify the task of replacing the nozzle 40 with the nozzle 50 in accordance with the bonding process.

Because the cloth bonding device 1 does not need to be provided with a lever that is compatible with the nozzle 50, its cost can be lowered. Because the task of replacing the nozzle 40 with the nozzle 50 is simplified, the time that the operator spends doing maintenance work on the cloth bonding device 1 is reduced.

When switching from the nozzle 40 to the nozzle 50, the operator can easily align the center of the upper roller 12 in the left-right direction with the center of the discharge width of the nozzle 50 in the left-right direction. Therefore, between them, the upper roller 12 and the lower roller 18 are able to clamp the upper cloth and the lower cloth, to which the adhesive is adhering, without any deviation to the left or the right. The cloth bonding device 1 is able to achieve stable feeding of the upper cloth and the lower cloth. The cloth bonding device 1 can therefore easily discharge the adhesive onto the ideal area on the lower cloth, even when the operator replaces the nozzle 40 with the nozzle 50, which discharges the adhesive in a different position in relation to the supply channel 9B from where the nozzle 40 discharges the adhesive.

Each one of the pair of the rails 67 guides the upper drive mechanism 15 in the left-right direction. Therefore, the operator can easily move the upper drive mechanism 15 to the left and the right. The operator tightens the first fastening member 81 that has been inserted through the first through-hole 72A into one of the first fastening holes 65. The operator tightens the second fastening member 85 that has been inserted through the second through-hole 72B into one of the second fastening holes 66. Therefore, the upper drive mechanism 15 can be fixed to the upper mounting base 21 at specific positions in the left-right direction. In other words, the first fastening holes 65, the two first through-holes 72A, the second through-hole 72B, the two first fastening members 81, and the second fastening member 85 function as a first fixing portion that fixes the upper drive mechanism 15 at one of fixing positions that are lined up in the left-right direction. Therefore, the fixing positions of the upper drive mechanism 15 are stable. The cloth bonding device 1 can therefore easily move the upper drive mechanism 15 to the left and the right and can stabilize the fixing positions of the upper drive mechanism 15 in relation to the upper mounting base 21.

The operator is able to fix the upper drive mechanism 15 to the upper mounting base 21 by inserting the first fastening members 81 through the first through-holes 72A and tightening them into the first fastening holes 65 and by inserting the second fastening member 85 through the second through-hole 72B and tightening it into the second fastening hole 66. Therefore, the cloth bonding device 1 is able to fix the upper drive mechanism 15 securely to the upper mounting base 21.

The second through-hole 72B and the two first through-holes 72A are oblong holes whose long axes extend in the left-right direction. When the upper drive mechanism 15 moves along the pair of the rails 67, each one of the two first through-holes 72A is easily positioned opposite one of the first fastening holes 65, and the second through-hole 72B is easily positioned opposite one of the second fastening holes 66. Therefore, the cloth bonding device 1 can improve the operability of the fixing of the upper drive mechanism 15 to the upper mounting base 21.

The second fastening holes 66 are lined up in the left-right direction below the first fastening holes 65. The second fastening member 85 is tightened into one of the second fastening holes 66 below the two first fastening members 81. The first fastening members 81 and the second fastening member 85 fix the upper drive mechanism 15 to the upper mounting base 21 in positions that are apart from one another in the up-down direction. Therefore, the cloth bonding device 1 is able to fix the upper drive mechanism 15 even more securely to the upper mounting base 21.

The upper drive mechanism 15 is able to move to the left and the right along the pair of the rails 67. Because the pair of the rails 67, which extend in the left-right direction, are disposed such that they face one another across a interval in the up-down direction, the operator can easily move the upper drive mechanism 15 to the left and the right. Therefore, the cloth bonding device 1 can improve the operability of the moving of the upper drive mechanism 15 to the left and the right.

The operator can remove the upper drive mechanism 15 from the upper mounting base 21 by removing the second fastening member 85 and the two first fastening members 81. The removed upper drive mechanism 15 can be placed on the work bench 200 in a position that is set apart from the base portion 2, for example. Because it is possible to remove only the upper drive mechanism 15, the operator can easily performs tensions adjustments and the like on the first synchronization belt 24 and the second synchronization belt, for example. Therefore, the cloth bonding device 1 can simplify maintenance work on the upper drive mechanism 15.

The lever 9 supports the nozzle 40 and the nozzle 48, which have different adhesive discharge widths, such that either one can be mounted and removed. When replacing the nozzle 40 with the nozzle 48, the operator is able to align the center of the upper roller 12 in the left-right direction with the center of the discharge width of the nozzle 48 in the left-right direction. Between them, the upper roller 12 and the lower roller 18 are able to clamp the upper cloth and the lower cloth, to which the adhesive is adhering, without any deviation to the left or the right. The cloth bonding device 1 is able to achieve stable feeding of the upper cloth and the lower cloth. The cloth bonding device 1 can therefore easily discharge the adhesive onto the ideal area on the lower cloth, even when the operator replaces the nozzle 40 with the nozzle 48, for which the adhesive discharge width is different from that of the nozzle 40.

When replacing the nozzle 40 with the nozzle 50 and mounting the nozzle 50 on the lever 9, the operator moves the lower drive mechanism 25 from the first specified position to the second specified position. The second specified position is the position of the lower drive mechanism 25 in the left-right direction where the center of the lower roller 18 in the left-right direction is substantially aligned with the center of the discharge width of the nozzle 50 in the left-right direction. Between them, the lower roller 18 and the upper roller 12 are able to clamp the upper cloth and the lower cloth, to which the adhesive is adhering, without any deviation to the left or the right. The cloth bonding device 1 is able to achieve stable feeding of the upper cloth and the lower cloth. The cloth bonding device 1 can therefore discharge the adhesive onto the ideal area on the lower cloth even more easily, even when the operator replaces the nozzle 40 with the nozzle 50, which projects from the supply channel 9B in a different direction than does the nozzle 40.

The operator tightens each one of the threaded members 59 that has been inserted through one of the two insertion holes 58 into corresponding one of the threaded holes 82C, which are lined up in the left-right direction. Therefore, the lower drive mechanism 25 can be fixed to the lower mounting base 29 at specific positions in the left-right direction. In other words, the threaded holes 82C, the two insertion holes 58, and the two threaded members 59, function as a second fixing portion that fixes the lower drive mechanism 25 at one of fixing positions that are lined up in the left-right direction. Therefore, the cloth bonding device 1 can stabilize the fixing positions of the lower drive mechanism 25.

The two insertion holes 58 are oblong holes whose long axes extend in the left-right direction. When the lower drive mechanism 25 moves in the left-right direction, each one of the two insertion holes 58 is easily positioned opposite one of the threaded holes 82C. Therefore, the cloth bonding device 1 can improve the operability of the fixing of the lower drive mechanism 25 to the lower mounting base 29.

The operator can remove the lower drive mechanism 25 from the lower mounting base 29 by removing the two threaded members 59. The removed lower drive mechanism 25 can be placed on the work bench 200 in a position that is set apart from the base portion 2, for example. Because it is possible to remove only the lower drive mechanism 25, the operator can easily performs tensions adjustments and the like on the synchronization belt 88B, for example. Therefore, the cloth bonding device 1 can simplify maintenance work on the lower drive mechanism 25.

The present invention is not limited to the embodiment that is described above, and various types of modifications can be made. Instead of being provided with the pair of the rails 67, the cloth bonding device 1 may be provided with one rail 67.

Instead of being provided with the two first through-holes 72A, the cloth bonding device 1 may be provided with one first through-hole 72A.

The cloth bonding device 1 may also fix the upper drive mechanism 15 to the upper mounting base 21 using three bolts and three nuts, for example, instead of the second fastening member 85 and the two first fastening members 81. In the same manner, the cloth bonding device 1 may also fix the lower drive mechanism 25 to the lower mounting base 29 using two bolts and two nuts, for example, instead of the two threaded members 59.

Instead of being provided with the two first through-holes 72A, the cloth bonding device 1 may be provided with round holes that are discretely disposed in the left-right direction. When the upper drive mechanism 15 moves in the left-right direction, one of the round holes would be positioned opposite one of the first fastening holes 65. The operator would tighten the first fastening members 81 that have been inserted through the round holes into the first fastening holes 65. The operator could fix the upper drive mechanism 15 to the upper mounting base 21 at one of the fixing positions in the left-right direction. In the same manner, instead of being provided with the two insertion holes 58, the cloth bonding device 1 may be provided with round holes that are discretely disposed in the left-right direction. When the lower drive mechanism 25 moves in the left-right direction, one of the round holes would be positioned opposite one of the threaded holes 82C. The operator would tighten the threaded members 59 that have been inserted through the round holes into the threaded holes 82C. The operator could fix the lower drive mechanism 25 to the lower mounting base 29 at one of the fixing positions in the left-right direction.

The upper base 72 may be provided with fastening holes instead of with the two first through-holes 72A. In that case, the first fastening holes 65 and the second fastening holes 66 would not be provided in the upper mounting base 21, and the carrier portion that is provided on the upper edge of the front face of the upper base 72 would need only to bend downward on the front face side of the upper mounting base 21. When fixing the upper drive mechanism 15 to the upper mounting base 21, the operator would tighten the first fastening members 81 into the fastening holes in the upper base 72. The front ends of the first fastening members 81 would clamp the upper mounting base 21 against the carrier portion on the front face side of the upper mounting base 21. Therefore, the upper drive mechanism 15 could be fixed to the upper mounting base 21.

The upper drive mechanism 15 is fixed to the upper mounting base 21 using the second fastening member 85 and the two first fastening members 81, but a lever may also be provided on the upper base 72, and the upper drive mechanism 15 may be fixed by rotating the lever. The upper drive mechanism 15 may also include a drive source such as a motor, a cylinder, or the like that moves the upper drive mechanism 15 to the left and the right, with the carrier portion of the upper base 72 being carried by the upper rail 67. A ball screw that extends in the left-right direction may be coupled to the upper base 72, and the upper drive mechanism 15 may move the upper base 72 to the left and the right by rotating the ball screw. A rack that extends in the left-right direction may be coupled to the upper base 72, and a pinion that meshes with the rack may be provided on the upper mounting base 21. The upper drive mechanism 15 may then move the upper base 72 to the left and the right by rotating the pinion. A motor may also be provided as the drive source for rotating the ball screw or the pinion.

The lower arm 86 is substantially L-shaped in a right side view, and it extends upward toward the front from the left wall portion 82B, then bends at its front end and extends upward toward the rear. However, the lower arm 86 may also extend straight upward from its lower end, and it may also extend horizontally.

The adhesive discharge widths of the nozzles 40, 48, and 50 are not limited to the values in the embodiment that is described above. The adhesive discharge width of the nozzle 48 may also be greater than the adhesive discharge widths of the nozzles 40 and 50. Instead of being provided with the extension portion 53, the nozzle 50 may be provided with an extension portion whose width is the same as the adhesive discharge width of the nozzle 48.

In the embodiment that is described above, the lower drive mechanism 25 is able to move within the range where two of the threaded holes 82C can be positioned opposite the two insertion holes 58. The lower drive mechanism 25 is fixed to the lower mounting base 29 by inserting each one of the two threaded members 59 through one of the two insertion holes 58 and tightening it into the corresponding one of the threaded holes 82C. The present invention is not limited to this configuration, and the lower drive mechanism 25 may also be permanently fixed to the lower mounting base 29 and unable to move in the left-right direction. In that case, if the length of the lower roller is made longer than the length of the lower roller 18 in the embodiment that is described above, the lower roller and the upper roller 12 would be able to clamp the upper cloth and the lower cloth and feed them in the feed direction, even if the upper drive mechanism 15 moves to the left or the right. In some cases, the upper drive mechanism 15 could also be permanently fixed to the upper mounting base 21 and unable to move in the left-right direction. In those cases, it would be acceptable for the length of the upper roller to be made longer than the length of the upper roller 12 in the embodiment that is described above, and for the lower drive mechanism 25 to be moved in the left-right direction. However, during the bonding operation, there would be times when the operator would find the work difficult, because the position of the lower roller 18 in relation to the upper roller would not be visible. Therefore, it is preferable for the upper drive mechanism 15 to be able to move in the left-right direction.

## Claims

1. A cloth bonding device (1) comprising:
a base portion (2);
a pillar portion (3) extending upward from the base portion;
an arm portion (4) extending from the pillar portion, the arm portion being disposed opposite the base portion;
an upper roller (12) configured to feed a cloth;
a lower roller (18) facing the upper roller and disposed below the cloth, the lower roller clamping the cloth against the upper roller and feeding the cloth in a feed direction by operating in coordination with the upper roller;
a nozzle (40, 48, 50) capable of being mounted on and removed from a support body (9) provided on the arm portion, the nozzle discharging an adhesive onto the cloth on an upstream side of the lower roller and the upper roller in the feed direction; and
an upper drive mechanism (15) configured to support and rotationally drive the upper roller;
**characterized by**
an upper mounting base (21) provided on the arm portion such that the upper drive mechanism is fixed to the upper mounting base;
a guide portion (67) provided on the upper mounting base and extending in a specified direction parallel to a direction in which the arm portion extends, the guide portion guiding the upper drive mechanism in the specified direction; and
a first fixing portion configured to fix the upper drive mechanism guided by the guide portion to one of fixing positions lined up in the specified direction.

2. The cloth bonding device according to claim 1, wherein
the first fixing portion includes
fastening holes (65, 66) provided in the upper mounting base and discretely disposed along the specified direction,
a through-hole (72A, 72B) provided in the upper drive mechanism and disposed opposite at least one of the fastening holes, and
a fastening member (81, 85) configured to be inserted through the through-hole and tightened into one of the fastening holes.

3. The cloth bonding device according to claim 2, wherein
the through-hole is an oblong hole having a long axis extending in the specified direction.

4. The cloth bonding device according to either one of claims 2 and 3, wherein
the fastening holes include first fastening holes (65) discretely disposed in the specified direction and second fastening holes (66) discretely disposed in the specified direction below the first fastening holes,
a first through-hole (72A) as the through-hole is disposed opposite at least one of the first fastening holes,
a second through-hole (72B) as the through-hole is disposed opposite at least one of the second fastening holes when the first through-hole is disposed opposite the at least one of the first fastening holes,
a first fastening member (81) as the fastening member is inserted through the first through-hole and tightened into the at least one of the first fastening holes, and
a second fastening member (85) as the fastening member is inserted through the second through-hole and tightened into the at least one of the second fastening holes.

5. The cloth bonding device according to any one of claims 1 to 4, wherein
the guide portion includes a pair of rails (67) arranged facing each other with an interval in the up-down direction, each of the pair of the rails extending in the specified direction.

6. The cloth bonding device according to any one of claims 1 to 5, wherein
the upper drive mechanism includes
an upper base (72) fixed to the upper mounting base and provided with the through-hole,
an upper motor (76) provided on the upper base,
an upper arm base (75) extending downward from the upper base,
an upper arm (74) with one end coupled to the upper arm base and another end supporting the upper roller, and
an upper driving force transmission portion (78) provided in the upper arm base and the upper arm and transmitting the driving force of the upper motor to the upper roller.

7. The cloth bonding device according to any one of claims 1 to 6, wherein
the nozzle includes a first nozzle (40, 50) and a second nozzle (48), the second nozzle having a different discharge width from that of the first nozzle, the discharge width being the width, in the specified direction, of the adhesive discharged from the nozzle, and
the support body supports one of the first nozzle and the second nozzle in attachable and detachable manner.

8. The cloth bonding device according to any one of claims 1 to 7, further comprising:
a lower drive mechanism (25) configured to support and rotationally drive the lower roller;
a lower mounting base (29) fixed to the base portion such that the lower drive mechanism is fixed to the lower mounting base; and
a second fixing portion configured to fix the lower drive mechanism in one of fixing positions lined up in the specified direction,
wherein
the second fixing portion includes
threaded holes (82C) provided in the lower drive mechanism and discretely disposed in the specified direction,
an insertion hole (58) provided in the lower mounting base and disposed opposite at least one of the threaded holes, and
a threaded member (59) configured to be inserted through the insertion hole and tightened into one of the threaded holes.

9. The cloth bonding device according to claim 8, wherein
the insertion hole is an oblong hole having a long axis extending in the specified direction.

10. The cloth bonding device according to either one of claims 8 and 9, wherein
the lower drive mechanism includes
a lower base (82) fixed to the lower mounting base and provided with the threaded holes,
a lower motor (84) provided on the lower base,
a lower arm (86) extending upward from the lower base and supporting the lower roller at an upper end thereof, and
a lower driving force transmission portion (88) provided in the lower base and the lower arm and transmitting the driving force of the lower motor to the lower roller.

## Patentansprüche

1. Tuchfügevorrichtung (1) mit:
einem Basisabschnitt (2);
einem Säulenabschnitt (3), der sich von dem Basisabschnitt nach oben erstreckt;
einem Armabschnitt (4), der sich von dem Säulenabschnitt erstreckt, wobei der Armabschnitt gegenüber dem Basisabschnitt angeordnet ist;
einer oberen Walze (12), die dazu konfiguriert ist, ein Tuch vorzuschieben;
einer unteren Walze (18), die der oberen Walze zugewandt ist und unter dem Tuch anzuordnen ist, wobei die untere Walze das Tuch gegen die obere Walze klemmt und das Tuch in einer Vorschubrichtung durch einen koordinierten Betrieb mit der oberen Walze vorschiebt;
einer Düse (40, 48, 50), die an einem Stützkörper (9) montiert und von diesem gelöst werden kann, der an dem Armabschnitt vorgesehen ist, wobei die Düse ein Klebemittel auf das Tuch an einer stromaufwärtigen Seite der unteren Walze und der oberen Walze in der Vorschubrichtung auslässt; und
einem oberen Antriebsmechanismus (15), der dazu konfiguriert ist, die obere Walze zu stützen und drehend anzutreiben; **gekennzeichnet durch**
eine obere Montagebasis (21), die an dem Armabschnitt so vorgesehen ist, dass der obere Antriebsmechanismus an der oberen Montagebasis befestigt ist;
einen Führungsabschnitt (67), der an der oberen Montagebasis vorgesehen ist und sich in einer spezifischen Richtung parallel zu jener Richtung erstreckt, in der sich der Armabschnitt erstreckt, wobei der Führungsabschnitt den oberen Antriebsmechanismus in der spezifischen Richtung führt; und
einen ersten Befestigungsabschnitt, der dazu konfiguriert ist, den oberen Antriebsmechanismus, der durch den Führungsabschnitt geführt ist, an einer einzigen Befestigungsposition von Befestigungspositionen zu befestigen, die in der spezifischen Richtung aufgereiht sind.

2. Tuchfügevorrichtung gemäß Anspruch 1, wobei
der erste Befestigungsabschnitt Folgendes aufweist:
Fixierlöcher (65, 66), die in der oberen Montagebasis vorgesehen und diskret entlang der spezifischen Richtung angeordnet sind,
ein Durchgangsloch (72A, 72B), das in dem oberen Antriebsmechanismus vorgesehen und zumindest gegenüber einem der Fixierlöcher angeordnet ist, und
ein Fixierelement (81, 85), das dazu konfiguriert ist, durch das Durchgangsloch hindurch eingesetzt zu werden und in einem der Fixierlöcher befestigt zu werden.

3. Tuchfügevorrichtung gemäß Anspruch 2, wobei
das Durchgangsloch ein Langloch mit einer Längsachse ist, die sich in der spezifischen Richtung erstreckt.

4. Tuchfügevorrichtung gemäß einem der Ansprüche 2 und 3, wobei
die Fixierlöcher erste Fixierlöcher (65), die diskret in der spezifischen Richtung angeordnet sind, und zweite Fixierlöcher (66) aufweisen, die diskret in der spezifischen Richtung unter den ersten Fixierlöchern angeordnet sind,
ein erstes Durchgangsloch (72A) als das Durchgangsloch zumindest gegenüber einem der ersten Fixierlöcher angeordnet ist,
ein zweites Durchgangsloch (72B) als das Durchgangsloch zumindest gegenüber einem der zweiten Fixierlöcher angeordnet ist, wenn das erste Durchgangsloch zumindest gegenüber einem der ersten Fixierlöcher angeordnet ist,
ein erstes Fixierelement (81) als das Fixierelement durch das erste Durchgangsloch hindurch eingesetzt ist und in dem zumindest einen ersten Fixierloch befestigt ist, und
ein zweites Fixierelement (85) als das Fixierelement durch das zweite Durchgangsloch hindurch eingesetzt ist und in dem zumindest einen zweiten Fixierloch befestigt ist.

5. Tuchfügevorrichtung gemäß einem der Ansprüche 1 bis 4, wobei
der Führungsabschnitt ein Paar Schienen (67) aufweist, die einander zugewandt in einem Intervall in der Oben/Unten-Richtung angeordnet sind, wobei sich jede Schiene des Paares in der spezifischen Richtung erstreckt.

6. Tuchfügevorrichtung gemäß einem der Ansprüche 1 bis 5, wobei der obere Antriebsmechanismus Folgendes aufweist:
eine obere Basis (72), die an der oberen Montagebasis befestigt ist und mit dem Durchgangsloch versehen ist,
einem oberen Motor (76), der an der oberen Basis vorgesehen ist,
eine obere Armbasis (75), die sich von der oberen Basis nach unten erstreckt,
einen oberen Arm (74), von dem ein Ende an der oberen Armbasis gekoppelt ist und von dem ein anderes Ende die obere Walze stützt, und
einen oberen Antriebskraftübertragungsabschnitt (78), der in der oberen Armbasis und dem oberen Arm vorgesehen ist und die Antriebskraft des oberen Motors zu der oberen Walze überträgt.

7. Tuchfügevorrichtung gemäß einem der Ansprüche 1 bis 6, wobei
die Düse eine erste Düse (40, 50) und eine zweite Düse (48) aufweist, wobei die zweite Düse eine von der ersten Düse unterschiedliche Auslassbreite hat, wobei die Auslassbreite jene Breite in der spezifischen Richtung ist, in der das Klebemittel aus der Düse ausgelassen wird, und
der Stützkörper entweder die erste Düse oder die zweite Düse anbringbar und lösbar stützt.

8. Tuchfügevorrichtung gemäß einem der Ansprüche 1 bis 7, des Weiteren mit:
einem unteren Antriebsmechanismus (25), der dazu konfiguriert ist, die untere Walze zu stützen und drehend anzutreiben;
einer unteren Montagebasis (29), die an dem Basisabschnitt so befestigt ist, dass der untere Antriebsmechanismus an der unteren Montagebasis befestigt ist; und
einem zweiten Befestigungsabschnitt, der dazu konfiguriert ist, den unteren Antriebsmechanismus an einer einzigen Befestigungsposition von Befestigungspositionen zu befestigen, die in der spezifischen Richtung aufgereiht sind, wobei
der zweite Befestigungsabschnitt Folgendes aufweist:
Gewindelöcher (82C), die in dem unteren Antriebsmechanismus vorgesehen und in der spezifischen Richtung diskret angeordnet sind,
ein Einsetzloch (58), das in der unteren Montagebasis vorgesehen ist und zumindest gegenüber einem der Gewindelöcher angeordnet ist, und
ein Gewindeelement (59), das dazu konfiguriert ist, durch das Einsetzloch eingesetzt zu werden und in einem der Gewindelöcher befestigt zu werden.

9. Tuchfügevorrichtung gemäß Anspruch 8, wobei
das Einsetzloch ein Langloch mit einer Längsachse ist, die sich in der spezifischen Richtung erstreckt.

10. Tuchfügevorrichtung gemäß einem der Ansprüche 8 und 9, wobei
der untere Antriebsmechanismus Folgendes aufweist:
eine untere Basis (82), die an der unteren Montagebasis befestigt ist und mit den Gewindelöchern versehen ist,
einen unteren Motor (84), der an der unteren Basis vorgesehen ist,
einen unteren Arm (86), der sich von der unteren Basis nach oben erstreckt und die untere Walze an seinem oberen Ende stützt, und
einen unteren Antriebskraftübertragungsmechanismus (88), der in der unteren Basis und dem unteren Arm vorgesehen ist und die Antriebskraft des unteren Motors zu der unteren Walze überträgt.

## Revendications

1. Dispositif de liaison de tissus (1) comprenant :
une partie base (2) ;
une partie pilier (3) s'étendant vers le haut depuis la partie base ;
une partie bras (4) s'étendant depuis la partie pilier, la partie bras étant disposée à l'opposé de la partie base ;
un rouleau supérieur (12) configuré pour fournir un tissu ;
un rouleau inférieur (18) orienté vers le rouleau supérieur et disposé en dessous du tissu, le rouleau inférieur serrant le tissu contre le rouleau supérieur et fournissant le tissu dans une direction de fourniture par fonctionnement en coordination avec le rouleau supérieur ;
une buse (40, 48, 50) apte à être montée sur et retirée d'un corps de support (9) prévu sur la partie bras, la buse distribuant un adhésif sur le tissu sur un côté amont du rouleau inférieur et du rouleau supérieur dans la direction de fourniture ; et
un mécanisme d'entraînement supérieur (15) configuré pour supporter et entraîner en rotation le rouleau supérieur ;
**caractérisé par**
une base de montage supérieure (21) prévue sur la partie bras de telle manière que le mécanisme d'entraînement supérieur est fixé sur la base de montage supérieure ;
une partie guide (67) prévue sur la base de montage supérieure et s'étendant dans une direction spécifiée, parallèle à une direction dans laquelle la partie bras s'étend, la partie guide guidant le mécanisme d'entraînement supérieur dans la direction spécifiée ; et
une première partie de fixation configurée pour fixer le mécanisme d'entraînement supérieur guidé par la partie guide sur une des positions de fixation alignées dans la direction spécifiée.

2. Dispositif de liaison de tissus selon la revendication 1, dans lequel
la première partie de fixation comporte :
des trous d'attache (65, 66) prévus dans la base de montage supérieure et disposés de façon discrète le long de la direction spécifiée,
un trou de passage (72A, 72B) prévu dans le mécanisme d'entraînement supérieur et disposé à l'opposé d'au moins l'un des trous d'attache, et
un élément d'attache (81, 85) configuré pour être inséré dans le trou de passage et enfoncé dans l'un des trous d'attache.

3. Dispositif de liaison de tissus selon la revendication 2, dans lequel
le trou de passage est un trou oblong ayant un axe long s'étendant dans la direction spécifiée.

4. Dispositif de liaison de tissus selon l'une ou l'autre des revendications 2 et 3, dans lequel
les trous d'attache comportent des premiers trous d'attache (65) disposés de façon discrète dans la direction spécifiée et des seconds trous d'attache (66) disposés de façon discrète dans la direction spécifiée en dessous des premiers trous d'attache,
un premier trou de passage (72A) lorsque le trou de passage est disposé à l'opposé d'au moins l'un des premiers trous d'attache,
un second trou de passage (72B) lorsque le trou de passage est disposé à l'opposé d'au moins l'un des seconds trous d'attache lorsque le premier trou de passage est disposé à l'opposé d'au moins l'un des premiers trous d'attache,
un premier élément d'attache (81) lorsque l'élément d'attache est inséré dans le premier trou de passage et enfoncé dans l'au moins un des premiers trous d'attache, et
un second élément d'attache (85) lorsque l'élément d'attache est inséré dans le second trou de passage et enfoncé dans l'au moins un des seconds trous d'attache.

5. Dispositif de liaison de tissus selon l'une quelconque des revendications 1 à 4, dans lequel
la partie guide comporte une paire de rails (67) agencés l'un en face de l'autre avec un intervalle dans la direction descendante, chacun de la paire des rails s'étendant dans la direction spécifiée.

6. Dispositif de liaison de tissus selon l'une quelconque des revendications 1 à 5, dans lequel
le mécanisme d'entraînement supérieur comporte :
une base supérieure (72) fixée sur la base de montage supérieure et dotée du trou de passage,
un moteur supérieur (76) prévu sur la base supérieure,
une base de bras supérieur (75) s'étendant vers le bas depuis la base supérieure,
un bras supérieur (74) avec une extrémité couplée à la base de bras supérieur et une autre extrémité supportant le rouleau supérieur, et
une partie transmission de force d'entraînement supérieure (78) prévue dans la base de bras supérieur et le bras supérieur et transmettant la force d'entraînement du moteur supérieur au rouleau supérieur.

7. Dispositif de liaison de tissus selon l'une quelconque des revendications 1 à 6, dans lequel
la buse comporte une première buse (40, 50) et une seconde buse (48), la seconde buse présentant une largeur de distribution différente de celle de la première buse, la largeur de distribution étant la largeur, dans la direction spécifiée, de l'adhésif distribué depuis la buse, et
le corps de support supporte l'une parmi la première buse et la seconde buse de manière fixable et séparable.

8. Dispositif de liaison de tissus selon l'une quelconque des revendications 1 à 7, comprenant en outre :
un mécanisme d'entraînement inférieur (25) configuré pour supporter et entraîner en rotation le rouleau inférieur ;
une base de montage inférieure (29) fixée sur la partie base de telle manière que le mécanisme d'entraînement inférieur est fixé sur la base de montage inférieure ; et
une seconde partie de fixation configurée pour fixer le mécanisme d'entraînement inférieur dans une des positions de fixation alignées dans la direction spécifiée,
dans lequel
la seconde partie de fixation comporte :
des trous filetés (82C) prévus dans le mécanisme d'entraînement inférieur et disposés de façon discrète dans la direction spécifiée,
un trou d'insertion (58) prévu dans la base de montage inférieure et disposé à l'opposé d'au moins l'un des trous filetés, et
un élément fileté (59) configuré pour être inséré dans le trou d'insertion et enfoncé dans l'un des trous filetés.

9. Dispositif de liaison de tissus selon la revendication 8, dans lequel
le trou d'insertion est un trou oblong ayant un axe long s'étendant dans la direction spécifiée.

10. Dispositif de liaison de tissus selon l'une ou l'autre des revendications 8 et 9, dans lequel
le mécanisme d'entraînement inférieur comporte :
une base inférieure (82) fixée sur la base de montage inférieure et dotée des trous filetés,
un moteur inférieur (84) prévu sur la base inférieure,
un bras inférieur (86) s'étendant vers le haut depuis la base inférieure et supportant le rouleau inférieur sur une extrémité supérieure de celui-ci, et
une partie transmission de force d'entraînement inférieure (88) prévue dans la base inférieure et le bras inférieur et transmettant la force d'entraînement du moteur inférieur au rouleau inférieur.
